(19) Europäisches Patentamt
European Patent Office
Office européen des brevets

(11) Numéro de publication: **0 021 990**
**B1**

(12) # FASCICULE DE BREVET EUROPEEN

(45) Date de publication du fascicule du brevet: **01.12.82**

(21) Numéro de dépôt: **80400893.6**

(22) Date de dépôt: **18.06.80**

(51) Int. Cl.³: **C 01 G 15/00**, C 01 F 17/00, C 22 B 3/00, C 22 B 59/00, C 22 B 58/00

(54) **Procédé de traitement de mélange d'oxydes de terres rares et de gallium.**

(30) Priorité: **03.07.79 FR 7917212**

(43) Date de publication de la demande: **07.01.81 Bulletin 81/1**

(45) Mention de la délivrance du brevet: **01.12.82 Bulletin 82/48**

(84) Etats contractants désignés: **AT BE CH DE FR GB IT LI NL SE**

(56) Documents cités:

**DE-B-1 190 196**
**FR-A-2 397 464**
**US-A-3 151 946**
**US-A-3 920 450**

**CHEMICAL ABSTRACTS, vol. 78, no. 24 (1973) 18 juin, page 130, ref. 149943c. Columbus, Ohio, US A.P. SAVOSTIN et al.: «Extraction of gallium from hydrochloride solutions using a tri-n-alkyl-amine oxide».**

(73) Titulaire: **RHONE-POULENC SPECIALITES CHIMIQUES, "Les miroirs" 18, Avenue d'Alsace, F-92400 Courbevoie (FR)**

(72) Inventeur: **Leveque, Alain, 8-10, rue Manin, F-75019 Paris (FR)**
Inventeur: **Triollier, Michel, Le Parc des Aigles 17, rue Grande Serpentine, F-60270 Gouvieux (FR)**

(74) Mandataire: **Savina, Jacques et al, RHONE-POULENC RECHERCHES Service Brevets Chimie et Polymères 25, Quai Paul Doumer, F-92408 Courbevoie Cedex (FR)**

**EP 0 021 990 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

# Procédé de traitement de mélange d'oxydes de terres rares et de gallium

La pr‹ sente invention concerne un procédé de traitement de mélanges d'oxydes de terres rares et de gallium. Elle a trait en particulier, à la récupération des matières premières provenant des grenats de gallium et de terres rares.

Le rendement de fabrication des grenats de gallium et de terres rares ne dépasse pas actuellement 40%. Ceci est dû au nombre important des hors normes au niveau des grenats : culots de creuset, résidus de coupe, résidus de polissage. La récupération des matières premières provenant de ces diverses sources constitue un problème important compte-tenu du prix des oxydes de gallium et de terres rares.

La présente invention concerne un procédé de traitement de mélanges d'oxydes de terres rares et de gallium qui permet notamment de récupérer avec des rendements très élevés, et, dans certains cas, une pureté très élevée, d'une part, le gallium et, d'autre part, les terres rares.

La présente invention concerne un procédé de traitement de mélanges d'oxydes de terres rares et de gallium, caractérisé en ce que, dans une première étape, l'on opère la mise en solution du mélange au moyen d'un acide, dans une deuxième étape, on met en contact la solution issue de l'attaque acide avec une phase organique contenant au moins un agent d'extraction insoluble dans l'eau, éventuellement en solution dans un diluant, et choisi parmi la classe des agents d'extraction anioniques, celle des agents d'extraction solvatants ou celle des agents d'extraction cationiques de façon à séparer par extraction liquide/liquide le gallium des terres rares, dans une troisième étape on récupère suite à ladite extraction le gallium dans la phase organique et les terres rares dans la phase aqueuse ou le gallium dans la phase aqueuse et les terres rares dans la phase organique.

Au sens de la présente invention, on entend par mélanges d'oxydes de terres rares et de gallium, soit des mélanges d'oxydes simples de gallium et de terres rares, soit des oxydes mixtes contenant au moins du gallium et ou moins une terre rare. On entend par terre rare, au moins un élément pris dans le groupe constitué par les lanthanides (éléments ayant un numéro atomique allant de 57 à 71 inclus) et l'yttrium (élément ayant pour numéro atomique 39).

Plus précisément, les mélanges d'oxydes de terres rares et de gallium que l'on peut traiter selon le procédé de la présente invention contiennent au moins un mélange $Ga_2O_3$ et $TR_2O_3$ (TR représentant un élément choisi parmi le groupe constitué par les terres rares) et/ou un oxyde mixte de formule $(TR)_x (Ga)_y O_z$ dans laquelle x, y, z sont des nombres quelconques, (TR représentant au moins un élément pris dans le groupe constitué par les terres rares), étant entendu que cet oxyde mixte peut contenir d'autres élément que Ga et TR en substitution et/ou inclusion dans la structure de l'oxyde mixte.

Selon un mode de mise en œuvre préféré du procédé selon l'invention, on traitera des oxydes tres éléments que Ga et TR en substitution et/ou moins une terre rare et/ou des rebuts et/ou résidus de fabrication de ceux-ci.

A titre purement indicatif et non limitatif, les oxydes mixtes que l'on peut traiter selon le procédé de l'invention, sont notamment:

1) Les oxydes mixtes ayant une structure du type grenat:

Parmi ces oxydes mixtes, on peut citer ceux ayant pour formule

$$TR_{3+\alpha} (Ga_{5-x} A_x)_{1-\frac{\alpha}{5}} O_{12}$$

dans laquelle

TR est au moins un élément choisi parmi le groupe constitué par le gadolinium, l'yttrium, le samarium et le néodyme,

A est choisi parmi le groupe contenant l'aluminium et le scandium

$\alpha = \pm 0,20$

$0 \leqslant x < 1$

On peut citer également dans cette classe, les oxydes mixtes de formule:

$$(TR_1)_{3-x-y} (TR_2)_x M_x Fe_{5-z} Ga_z Ge_y O_{12}$$

dans laquelle:

$$0 < x < 0,5 \ ; \ y \geqslant 0 \ ; \ 0 < z \leqslant 1,5$$

$TR_1$ est choisi parmi le groupe constitué par l'yttrium et le lutétium

$TR_2$ est choisi parmi le groupe constitué par le samarium et l'europium à l'état trivalent

M est le calcium.

On peut également citer dans cette classe les oxydes mixtes de formule:

$$TR_{3-x} M_x Ga_{5-x} A_x O_{12}$$

dans laquelle:

$$0 \leqslant x < 1 \text{ et}$$

TR est au moins un élément choisi parmi le groupe constitué par le gadolinium, le samarium, le néodyme;

M est choisi parmi le groupe constitué par le calcium, le strontium, le magnésium,

A est choisi parmi le groupe constitué par l'étain et le zirconium.

On peut également citer dans cette classe, les oxydes mixtes de formule:

$$(TR)_{3-x} Bi_x Fe_{5-y} A_y O_{12}$$

dans laquelle

$$0,2 < x < 2 \quad 0 < y < 1,5 \ ;$$

TR est au moins un élément choisi parmi le groupe constitué par l'yttrium, le néodyme, le samarium, le gadolinium;

$A = Ga_{1-\alpha} M_{\alpha}$ avec $0 \leqslant \alpha < 1$

M est choisi parmi le groupe constitué par l'aluminium, l'indium et le scandium.

On peut également citer dans cette classe, les oxydes mixtes de formule:

$$Y_3Al_{5-x}Ga_xO_{12} : Ce^{3+}$$

dans laquelle

$$0 < x \leqslant 5$$

2) Les oxydes mixtes ayant une structure du type orthogallate.

Parmi cette classe, on peut citer les oxydes mixtes de formule:

$$TR\ MO_3 : Nd^{3+}$$

dans laquelle

TR est au moins un élément choisi parmi le groupe constitué par l'yttrium, le gadolinium, le lutétium, le lanthane,

$M = Al_{1-x}Ga_x$ avec $0 < x \leqslant 1$

3) Les oxydes mixtes ayant une structure du type spinelle:

Parmi cette classe, on peut citer les oxydes mixtes de formule:

$$M\ A_2O_4 : Eu^{2+}$$

dans laquelle

M est un élément choisi parmi le groupe constitué par le magnésium, le calcium, le baryum et le strontium;

$A = Ga_xAl_{1-x}$ avec $0 < x \leqslant 1$.

4) Les oxydes mixtes ayant une structure du type magnétoplombite.

Parmi cette classe, on peut citer les oxydes mixtes de formule:

$$M\ A_{12}O_{19} : Eu^{2+}$$

et

$$TR\ M\ A_{11}O_{19} : Tb^{3+}$$

dans laquelle

M est un élément choisi parmi le groupe constitué par le magnésium, le calcium, le strontium et le baryum,

TR est au moins un élément choisi parmi le groupe comprenant le cérium à l'état trivalent et le gadolinium,

$A = Al_{1-x}Ga_x$ avec $0 < x \leqslant 1$.

On pourra traiter, plus particulièrement, des grenats de gadolinium et de gallium et/ou des rebuts et/ou résidus de fabrication de ceux-ci. Ces grenats répondent à la formule $Gd_3Ga_5O_{12}$.

Les résidus de fabrication traités selon le procédé de la présente invention peuvent notamment provenir des culots de creusets ayant été formés lors de la fabrication des mélanges d'oxydes de terres rares et de gallium et/ou des résidus de coupe et/ou les résidus de polissage de ceux-ci.

Les rebuts de fabrication traités selon le procédé de la présente invention sont généralement des oxydes mixtes présentant des écarts de composition et/ou de structure par rapport aux normes définies pour ces produits.

Dans certains cas, et, en particulier, lorsque l'on traite des résidus de coupe ou de polissage, il peut être avantageux d'éliminer les matières organiques contenues dans ces résidus par des procédés bien connus de l'homme de l'Art comme le traitement sur charbon actif, sur polymères adsorbants ou par extraction dans une phase organique non complexante vis-à-vis du gallium et des terres rares.

C'est un des avantages du procédé selon la présente invention que de permettre le traitement de tous ces rebuts et/ou résidus quelle qu'en soit l'origine.

La mise en solution du mélange s'effectue par dissolution du mélange au moyen d'un acide, cette étape pourra également dans ce qui suit être appelée «attaque». L'acide peut être pur ou dilué, seul ou en mélange avec d'autres acides. On met en œuvre, de préférence, au moins un acide pris dans le groupe constitué par: l'acide chlorhydrique, l'acide nitrique, l'acide sulfurique, l'acide perchlorique, l'acide phosphorique. La nature de l'acide est choisie, de préférence, en fonction de l'étape de séparation ultérieure; on utilise avantageusement l'acide chlorhydrique ou l'acide nitrique.

Les conditions mises en œuvre varient selon les acides utilisés; la rapidité de la dissolution dépend notamment de la nature de l'acide, de sa concentration et de la température. De bonnes conditions sont généralement obtenues lorsque la dissolution est réalisée avec les acides purs concentrés à l'ébullition.

Selon le procédé de l'invention, il est avantageux d'obtenir après dissolution une certaine acidité résiduelle du milieu; à cette fin, on peut opérer la dissolution à reflux en mettant en œuvre un excès d'acide par rapport à la stoechiométrie. L'obtention d'une acidité résiduelle supérieure à 2 N s'avère particulièrement intéressante.

La dimension des particules du mélange n'est pas un facteur critique selon le procédé de l'invention; toutefois, si l'on désire une dissolution assez rapide, il est avantageux de mettre en œuvre des particules ayant une granulométrie assez fine, et, de préférence, dont le diamètre est inférieur à 400 micromètres; plus particulièrement, des particules ayant un diamètre compris entre 50 et 200 micromètres conduisent à une mise en œuvre aisée.

La concentration en oxydes dissous des solutions obtenues est ajustée de façon connue de l'homme de l'Art par les conditions de mise en œuvre de la dissolution. Il peut être avantageux en vue de l'étape de séparation ultérieure d'obtenir des concentrations les plus élevées possibles et, de préférence, supérieures à 100 g/l. Dans le cas particulier d'une attaque réalisée en milieu acide chlorhydrique ou nitrique, on peut atteindre des concentrations d'environ 400 g/l en oxyde dissous qui sont particulièrement favorables pour la séparation.

L'étape de séparation dans deux solutions du gallium et des terres rares est effectuée par extraction liquide/liquide au moyen d'une phase organique contenant au moins un agent d'extraction insoluble dans l'eau, éventuellement en solution dans un diluant. On réalise l'extraction par mise en contact de la solution issue de l'étape de dissolution avec ladite phase organique.

L'agent d'extraction mis en œuvre selon le procédé de l'invention est choisi parmi la classe des agents d'extraction anioniques, celle des agents d'extraction solvatants ou celle des agents d'extraction cationiques.

Les agents d'extraction anioniques mis en œuvre sont notamment les composés organiques à longue chaîne comportant des fonctions amines primaires, secondaires, tertiaires, ou des sels d'ammonium, sulfonium, phosphonium, quaternaires, les chaînes hydrocarbonées de ces composés ayant généralement, de préférence, entre environ 5 et 30 atomes de carbone.

Parmi ceux-ci, on peut citer par exemple:

— les produits commercialisés sous la marque Primène JM, constitués d'amines primaires de formule:

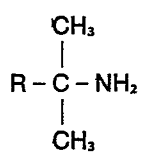

dans laquelle R est un radical hydrocarboné ayant de 18 à 24 atomes de carbone,

— les produits commercialisés sous la marque Amberlite LA-1 et constitués d'amines secondaires de formule:

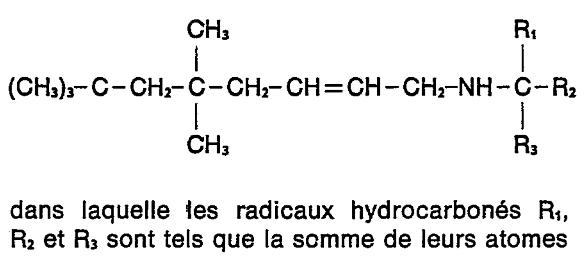

dans laquelle les radicaux hydrocarbonés $R_1$, $R_2$ et $R_3$ sont tels que la somme de leurs atomes de carbone est comprise entre 12 et 14,

— les produits commercialisés sous les marques Alamine 336 et Adogen 364 qui sont constituée d'amines tertiaires de formule $R_3N$ dans laquelle le radical hydrocarboné R a de 8 à 10 atomes de carbone,

— les produits commercialisés sous les marques Adogen 464 et Aliquat 336 qui sont constitués de sels d'ammonium quaternaires de formule:

$$[R_3N - CH_3]^+ X^-$$

dans laquelle le radical hydrocarboné R a de 8 à 10 atomes de carbone et X représente un anion, de préférence, chlorure, nitrate ou sulfate,

— les selst de sulfonium de formule générale

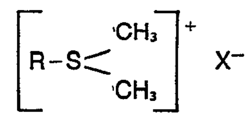

dans laquelle le radical hydrocarboné R a de 10 à 18 atomes de carbone et X représente un anion, de préférence chlorure, nitrate.

On peut également citer les amines et les sels d'ammonium quaternaires décrits dans les brevets américains n° 3 294 494 et n° 2 877 250.

Selon la nature de l'anion présent dans la solution aqueuse d'attaque, soit le gallium, soit les terres rares seront préférentiellement extraits par l'agent d'extraction anionique dans la phase organique. Ainsi, en milieu chlorure, le gallium sera préférentiellement extrait alors qu'en milieu nitrate ou sulfate, ce seront les terres rares qui seront préférentiellement extraites dans la phase organique.

Par ailleurs, en milieu chlorure tous les agents anioniques donnés ci-dessus peuvent être mis en œuvre. En milieu nitrate, on met, de préférence en œuvre les amines tertiaires ou les sels d'ammonium quaternaires et, en milieu sulfate, on met, de préférence, en œuvre les amines primaires.

Pour favoriser l'extraction, il peut être avantageux en milieu chlorure d'ajouter à la phase aqueuse de l'acide chlorhydrique. Il est utile que la concentration molaire en acide de la phase aqueuse soit au moins égale à la concentration molaire du gallium.

Il peut également être avantageux selon la nature de l'anion présent dans la phase aqueuse, d'ajouter à celle-ci des sels neutres non extractibles, c'est-à-dire respectivement des chlorures, nitrates ou sulfates alcalins, alcalino-terreux ou d'aluminium.

Les agents d'extraction solvatants mis en œuvre sont notamment les esters, les éthers, les sulfoxydes, les cétones et les alcools, les composés organophosphorés neutres et les oxydes de trialkylamine.

Parmi ceux-ci, on citera:

— les esters de formule générale

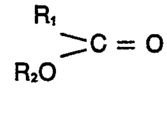

dans laquelle $R_1$ et $R_2$ sont des radicaux hydrocarbonés aromatiques et/ou aliphatiques ayant, de préférence, au moins 4 atomes de carbone et, par exemple, les acétates d'éthyle et de butyle;

— les éthers de formule générale $R_1 - O - R_2$ dans laquelle $R_1$ et $R_2$ sont des radicaux hydrocarbonés aromatiques et/ou aliphatiques ayant, de préférence, au moins 4 atomes de carbone

et, par exemple, les diéthyléthers et les éthers isopropylique et di-n-butylique;

— les sulfoxydes de formule générale

$$\begin{matrix} R_1 \\ \quad >SO \\ R_2 \end{matrix}$$

dans laquelle $R_1$ et $R_2$ sont des radicaux hydrocarbonés aromatiques et/ou aliphatiques ayant, de préférence, ou moins 4 atomes de carbone et, par exemple, le di-n-pentylsulfoxyde, le di-n-octylsulfoxyde, diphénylsulfoxyde;

— les cétones de formule générale

$$\begin{matrix} R_1 \\ \quad >C=O \\ R_2 \end{matrix}$$

dans laquelle $R_1$ et $R_2$ sont des radicaux hydrocarbonés aromatiques et/ou aliphatiques ayant, de préférence, au moins 4 atomes de carbone et, par exemple, les diisopropylcétones et la méthylisobutylcétone, l'oxyde de mésityle;

— les alcools de formule générale ROH dans laquelle R est un radical hydrocarboné aliphatique et/ou cycloaliphatique ayant, de préférence, au moins 4 atomes de carbone et, par exemple, le cyclohexanol, le n-hexanol 1, le 2-éthylhexanol, le n-heptanol, le n-octanol;

— les composés organo-phosphorés neutres de formules générales:

$$\begin{matrix} OR_1 \\ | \\ R_2-P=O \\ | \\ OR_3 \end{matrix} \text{ ou } \begin{matrix} OR_1 \\ | \\ R_2O-P=O \\ | \\ R_3 \end{matrix} \text{ ou } \begin{matrix} R_1 \\ | \\ R_2O-P=O \\ | \\ R_3 \end{matrix} \text{ ou}$$

$$\begin{matrix} R_1 \\ | \\ R_2-P=O \\ | \\ R_3 \end{matrix}$$

dans lesquelles $R_1$, $R_2$ et $R_3$ représentent des radicaux hydrocarbonés aromatiques et/ou aliphatiques ayant, de préférence, au moins 4 atomes de carbone et, par exemple, les stéaryl et cétyl esters de l'acide phosphorique, le tributylphosphate, le dibutyl butylphosphonate, le bis-(2-éthylhexyl) 2-éthylhexyl phosphonate, le bis-(dichlorométhyl) butyl phosphonate, l'oxyde de tri-n-octylphosphine. Parmi ces composés, on préfère mettre en œuvre le tributyl phosphate.

— les oxydes de trialkylamine de formule générale $R_3N=O$ dans laquelle R est un radical hydrocarboné aliphatique ayant, de préférence, au moins 4 atomes de carbone et, par exemple, l'oxyde de trioctylamine.

Selon la nature de l'anion présent dans la solution aqueuse d'attaque, soit le gallium, soit les terres rares seront préférentiellement extraits par l'agent d'extraction solvatant dans la phase organique. Ainsi, en milieu chlorure, le gallium sera préférentiellement extrait alors qu'en milieu nitrate, ce seront les terres rares qui seront préférentiellement extraites dans la phase organique.

Par ailleurs, en milieu chorure, tout agent solvatant peut être mis en œuvre. En milieu nitrate, on mettra de préférence, en œuvre les dérivés organophosphorés et les sulfoxydes.

Lorsque l'on met en œuvre les agents d'extraction solvatants en milieu chlorure, il est utile que la concentration molaire en acide de la phase aqueuse soit, au moins, égale à la concentration molaire du gallium dans la solution aqueuse d'attaque. A cette fin, il peut aussi être avantageux d'ajouter de l'acide chlorhydrique à la solution d'attaque pour opérer la séparation des solutions de gallium et de terres rares dans de bonnes conditions.

Pour favoriser l'extraction, il peut être avantageux d'ajouter à la phase aqueuse, des sels neutres non extractibles comme, par exemple, les chlorures ou les nitrates alcalins, alcalino-terreux ou d'aluminium.

Les agents d'extraction cationiques mis en œuvre sont notamment les acides organo-phosphorés; les acides aliphatiques ou aromatiques; les acides aliphatiques, aromatiques ou cycloaliphatiques halogénés; les acides naphthéniques; les fractions lourdes acides; les acides sulfoniques; les acides «Versatic»; les β-dicétones.

Parmi ceux-ci, on citera:

$$\begin{matrix} OR_1 \\ | \\ R_2O-P=O \\ | \\ OH \end{matrix} \text{ ou } \begin{matrix} OR_1 \\ | \\ R_2-P=O \\ | \\ OH \end{matrix} \text{ ou } \begin{matrix} R_1 \\ | \\ R_2-P=O \\ | \\ OH \end{matrix}$$

dans lesquelles $R_1$ et $R_2$ représentent des radicaux hydrocarbonés aliphatiques ou aromatiques tels que le nombre total d'atomes de carbone de ces radicaux soit au moins égal à 10. On préfère mettre en œuvre l'acide di(2-éthylhexyl) phosphorique et l'acide bis(2-éthylhexyl) phosphonique;

— les acides aliphatiques dans lesquels les radicaux hydrocarbonés ont de 3 à 20 atomes de carbone, et, en particulier, les acides butanoïque, valérique, octoïque, caproïque, caprylique, caprique, pélargonique, laurique;

— les acides aliphatiques, aromatiques ou cycloaliphatiques halogénés tels que, par exemple, l'acide alphabromolaurique;

— les acides naphténiques ayant la formule générale:

$$\begin{matrix} CH_2-CH_2 \\ | \qquad\quad \\ CH_2-CH_2 \end{matrix} >CH-(CH_2)_n-COOH$$

dans laquelle n est $\geqslant 1$;

— les fractions lourdes acides comportant notamment des mélanges d'acides en $C_5$-$C_6$, $C_7$-$C_9$, $C_9$-$C_{11}$, $C_{10}$-$C_{16}$, $C_{10}$-$C_{13}$, $C_{12}$-$C_{16}$;

— les acides sulfoniques tel que l'acide dinonylnaphtalène sulfonique;

— les acides «Versatic» (marque déposée par la Société Shell Chemicals) ayant pour formule générale:

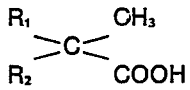

dans laquelle $R_1$ et $R_2$ sont des radicaux hydrocarbonés substitués ou non, et, en particulier, l'acide «Versatic 911» (marque déposée par Shell Chemicals) qui est un mélange d'acides monocarboxyliques tertiaires saturés pour lesquels $R_1$ et $R_2$ sont des radicaux hydrocarbonés dont la somme des atomes de carbone des deux radicaux est égale à 6, 7 ou 8 et qui est fabriqué par synthèse oxo à partir d'oléfines en $C_7$-$C_{11}$; l'acide «Versatic 15/19» (marque déposée par Shell Chemicals) dans lequel $R_1$ est un radical hexyle et $R_2$ un radical octyle; l'acide «Versatic 10» (marque déposée par Shell Chemicals) dérivé du procédé Shell de carboxylation d'oléfines en $C_9$ et pour lequel $R_1$ et $R_2$ sont des radicaux hydrocarbonés dont la somme des atomes de carbone des deux radicaux est égale à 7;

— les β-dicétones comme l'acétylacétone.

Les sélectivités observées dans la mise en œuvre des agents d'extraction cationiques étant généralement moins importantes que dans le cas des agents anioniques et des agents solvatants, on pourra préférer, selon l'invention, mettre en œuvre ces deux dernières classes d'agents d'extraction pour obtenir des séparations efficaces dans des conditions économiques avantageuses.

La proportion en agent d'extraction dans la phase organique n'est pas critique et peut varier dans de larges limites. Toutefois, il est, en général, avantageux que celle-ci soit la plus élevée possible. Ainsi, dans le cas des agents d'extraction anioniques et cationiques, une proportion comprise entre 10 et 40% en volume rapportée à la phase organique conduit à des conditions hydrodynamiques de séparation avantageuses. Dans le cas des agents d'extraction solvatants, certains d'entre eux (les moins visqueux) peuvent être utilisés sous forme non dilués, ce qui est extrêmement avantageux, car cela conduit à des capacités d'extraction très importantes.

Les diluants mis en œuvre selon le procédé de l'invention sont les diluants habituellement utilisés pour l'extraction liquide/liquide. Ils peuvent être utilsés seuls ou en mélange. Parmi ceux-ci, on peut citer les composés aliphatiques, comme, par exemple, l'heptane, le dodécane, l'hexane et les coupes pétrolières du type kérosène; les composés aromatiques comme, par exemple, le benzène, le toluène, l'éthylbenzène, le xylène et les coupes du type Solvesso (marque déposée par la Société Exxon) et enfin les dérivés halogénés de ces composés comme, par exemple, le chloroforme et le tétrachlorure de carbone.

La phase organique peut également contenir des agents modifieurs ainsi qu'il est bien connu dans le domaine de l'extraction liquide/liquide. Parmi ces agents modifieurs, on peut citer les corps à fonction alcool, en particulier, les alcools lourds dont le nombre d'atomes de carbone est compris entre 6 et 15 tels que le n-décanol et l'isodécanol et les phénols lourds, tel que le nonylphénol.

L'étape de séparation du gallium et des terres rares dans deux solutions conduit à l'obtention d'une solution aqueuse qui contient le ou les éléments non extraits de la solution d'attaque et d'une solution organique qui contient le ou les éléments extraits. Ainsi qu'il a été décrit, soit le gallium, soit les terres rares sont extraits dans la solution organique suivant la nature de l'anion présent dans la solution d'attaque.

L'étape de récupération en solution aqueuse du gallium ou des terres rares qui ont été extraits dans la solution organique s'effectue:

- lorsque l'on a mis en œuvre des agents anioniques ou solvatants lors de la séparation, par mise en contact de cette solution organique avec de l'eau ou une solution aqueuse faiblement acide dont la concentration en ions $H^+$ est, le préférence, inférieure ou égale à 0,1 N; le ou les éléments extraits transférant de la phase organique dans la phase aqueuse;
- lorsque l'on a mis en œuvre un agent cationique lors de la séparation, par mise en contact de cette solution organique avec une solution aqueuse d'acide fort. L'acide fort utilisé peut être identiques ou différent de celui mis en œuvre lors de l'attaque, le ou les éléments extraits transférant de la phase organique dans la solution aqueuse acide. La concentration d'acide mise en œuvre est ajustée en fonction de la nature de l'agent d'extraction et de la concentration recherchée pour l'élément récupéré dans la phase aqueuse.

A partir des solutions aqueuses neutres ou acides ainsi obtenues, on peut récupérer le gallium et les terres rares après éventuellement, une purification complémentaire par les méthodes courantes.

Ainsi qu'il est bien connu, cette purification complémentaire peut notamment consister pour le ou les terres rares en la précipitation des hydroxydes, oxalates ou carbonates et, pour le gallium en la précipitation de la galline ou en l'électrolyse pour obtenir du gallium métallique.

Par ailleurs, le procédé de la présente invention permet, dans certains cas, d'obtenir une solution de gallium dont la pureté est telle qu'à partir de celle-ci on peut préparer un oxyde de gallium de pureté suffisante pour être directement réutilisé dans la fabrication des oxydes mixtes.

Les étapes de séparation et de récupération peuvent être mises en œuvre dans les dispositifs classiques utilisés dans les procédés d'extraction liquide//liquide. De tels dispositifs comprennent généralement plusieurs étapes de systèmes mélangeurs-décanteurs, ou de colonnes garnies et/ou agitées, agencés pour réaliser les opérations d'extraction, de lavage sélectif et de récupération en phase aqueuse des éléments extraits.

Les exemples suivants sont donnés à titre non limitatif, ils illustrent le procédé de l'invention sans en limiter la portée.

Exemple 1

L'exemple suivant illustre l'attaque de résidus de fabrication de grenats de gallium et de gadolinium $Gd_3\ Ga_5O_{12}$ correspondant à la composition en gallium et en gadolinium exprimée en oxydes de 54% en poids de $Gd_2O_3$ et 46% en poids de $Ga_2O_3$.

On broie ces résidus de façon à obtenir une poudre dont le diamètre moyen des particules soit d'environ 200 microns (90% des particules ayant un diamètre compris entre environ 100 et 300 microns).

Un gramme de poudre est mis en contact à ébullition et à reflux avec 25 ml d'acide à diverses concentrations pendant y heures sous agitation. Le tableau ci-dessous rassemble les résultats obtenus concernant le pourcentage en poids de grenat solubilisé et l'acidité résiduelle de la solution A, B, C, D, E, F, G, H résultante.

| Solutions | Acides | Concentrations en poids en % | | Temps y d'attaque en H | % solubilisé (supérieur à) | Acidité résiduelle (Normalité) |
|---|---|---|---|---|---|---|
| A | $HNO_3$ | | 64 | 6 | > 99 | 13 |
| B | HCl | | 36 | 3 | > 99 | 11 |
| C | Mélange<br>$HNO_3 + HCl$ | HCl<br>$HNO_3$ | 24<br>21 | 5 | > 99<br>> 99 | 11,7 |
| D | $H_3PO_4$ | | 85 | 3 | > 99 | 14 |
| E | $H_2SO_4$ | | 95 | 4 | > 99 | 17 |
| F | Mélange<br>$HCl + H_2SO_4$ | HCl<br>$H_2SO_4$ | 18<br>47,5 | 3 | > 99 | 14 |
| G | Mélange<br>$HNO_3 - H_2SO_4$ | $H_2SO_4$<br>$HNO_3$ | 47,5<br>32 | 3 | > 99 | 15 |
| H | Mélange<br>$H_3PO_4 - H_2SO_4$ | $H_3PO_4$<br>$H_2SO_4$ | 42,5<br>47,5 | 4 | > 99 | 15,5 |

Exemple 2

330 grammes de poudre telle qu'obtenue selon l'exemple 1 sont mis en contact à ébullition et à reflux avec 1 litre d'acide nitrique 10 N pendant 20 heures;

— le rendement d'attaque est supérieur à 99%,
— l'acidité résiduelle est de 2 N.

La solution obtenue contient le gallium et le gadolinium dans les concentrations suivantes:

$Ga_2O_3$: 150 g/l ce qui correspond à Ga: 112 g/l
$Gd_2O_3$: 176 g/l ce qui correspond à Gd: 153 g/l

La séparation et la récupération du gallium et du gadolinium, à partir de cette solution sont réalisées dans un dispositif multiétages, les phases organiques et aqueuses circulant à contre-courant. Ce dispositif comprend une section d'extraction E composée de 7 étages, une section de lavage sélectif L composée de 6 étages et une section de régénération R composée de 4 étages. La phase organique contenant l'agent d'extraction circule successivement dans les sections E, L et R au débit V. La solution d'alimentation (débit $v_A$) issue de l'attaque est injectée dans la section d'extraction. La solution de nitrate d'ammonium 4 M (débit $v_L$), réalisant le lavage sélectif est introduite dans la section L. La solution aqueuse contenant le gallium purifié est récupérée à la sortie de la section extraction (débit $v_A + v_L$). On introduit dans la section R une solution aqueuse faiblement acide $HNO_3$ 0,1 N (débit $v_R$). Cette phase aqueuse est récupérée à la sortie de la section R. Elle contient alors le gadolinium purifié.

Le tableau ci-après rassemble les débits mis en œuvre et les résultats obtenus dans le cas:

1°) de la mise en œuvre d'un agent d'extraction anionique, l'Aliquat 336 (sous forme nitrate) dilué à 0,5 mole/litre dans le Solvesso 150,

2°) de la mise en œuvre d'un agent d'extraction solvatant, le tributylphosphate (T.B.P.) dilué à 50% en volume dans le kérosène.

| | DEBITS | | | | RESULTATS | |
|---|---|---|---|---|---|---|
| | V | $V_A$ | $V_L$ | $V_R$ | Solution de gallium purifié | Solution de gadolinium purifié |
| Aliquat | 5,85 | 1 | 0,18 | 1 | Débit $v_A + v_L = 1,18$<br>$Ga_2O_3$ : 127 g/l<br>$Gd_2O_3 < 1$ mg/l<br>Ga : 94,4 g/l | Débit $v_R = 1$<br>$Gd_2O_3$ : 176 g/l<br>$Ga_2O_3 < 1$ mg/l<br>Gd : 153 g/l |
| T.B.P. | 2,86 | 1 | 0,14 | 1,3 | Débit = 1,14<br>$Ga_2O_3$ : 131,6 g/l<br>$Gd_2O_3 < 1$ mg/l<br>Ga : 97,8 g/l | Débit = 1,3<br>$Gd_2O_3$ : 134,6 g/l<br>$Ga_2O_3 < 1$ mg/l<br>Gd : 116,6 g/l |

Nous constatons que le procédé selon l'invention permet d'obtenir des solutions purifiées contenant moins de 10 ppm (parties par million) de chaque élément Ga ou Gd dans l'autre.

Exemple 3

330 g de poudre telle qu'obtenue selon l'exemple 1, sont mis en contact à ébullition et à reflux avec 1 litre d'acide chlorhydrique ION pendant 4 heures. Le taux d'attaque est supérieur à 99%.

La solution obtenue a la composition suivante:

$Ga_2O_3$: 150 g/l ce qui correspond à Ga: 112 g/l

$Gd_2O_3$: 176 g/l ce qui correspond à Gd: 153 g/l

La séparation et la récupération du gallium et du gadolinium, à partir de cette solution sont réalisées dans le même dispositif multiétages que celui décrit à l'exemple 2.

La solution d'acide chlorhydrique 0,1 N (débit $v_L$), réalisant le lavage sélectif est introduite dans la section L. La solution aqueuse contenant le gadolinium purifié est récupérée à la sortie de la section d'extraction (débit $v_A + v_L$). On introduit dans la section R une solution aqueuse faiblement acide HCl 0,1 N (débit $v_R$). Cette phase aqueuse est récupérée à la sortie de la section R. Elle contient alors le gallium purifié.

Le tableau ci-dessous rassemble les débits mis en œuvre et les résultats obtenus dans le cas:

1°) de la mise en œuvre d'un agent d'extraction anionique: Aliquat 336 (sous forme chlorure) dilué à 0,5 mole/litre dans le Solvesso 150;

2°) de la mise en œuvre d'un agent d'extraction salvatant: le tributylphosphate (T.B.P.) dilué à 50% en volume dans le kérosène.

| | DEBITS | | | | RESULTATS | |
|---|---|---|---|---|---|---|
| | V | $V_A$ | $V_L$ | $V_R$ | Solution de gallium purifié | Solution de gadolinium purifié |
| Aliquat | 5 | 1 | 0,25 | 10 | Débit $v_R = 10$<br>$Ga_2O_3$ : 15 g/l<br>$Gd_2O_3 < 1$ mg/l<br>Ga : 11,2 g/l | Débit $v_A + v_L = 1,25$<br>$Gd_2O_3$ : 140,8 g/l<br>$Ga_2O_3 < 1$ mg/l<br>Gd : 122,4 g/l |
| T.B.P. | 2,2 | 1 | 0,1 | 2,2 | Débit = 2,2<br>$Ga_2O_3$ : 68,2 g/l<br>$Gd_2O_3 < 1$ mg/l<br>Ga : 50,9 g/l | Débit = 1,1<br>$Gd_2O_3$ : 160 g/l<br>$Ga_2O_3 < 1$ mg/l<br>Gd : 139 g/l |

Comme dans l'exemple précédent, il apparaît que le procédé selon l'invention permet, en seulement deux étapes (attaque et séparation par extraction liquide/liquide) d'obtenir, dans des conditions économiques très avantageuses des solutions purifiées. On peut noter que le gallium contenu dans le gadolinium est inférieur à 10 ppm; dans le cas du gadolinium contenu dans le gallium, la pureté indiquée est celle des limites analytiques de la méthode de dosage utilisée, si l'on concentre les solutions de gallium purifiée obtenues, on analyse effectivement moins de 10 ppm de gadolinium dans le gallium.

## Revendications

1. Procédé de traitement de mélange d'oxydes de terres rares et de gallium caractérisé en ce que, dans une première étape, l'on opère la mise en solution du mélange au moyen d'un acide, dans une deuxième étape, on met en contact la solution issue de l'attaque acide avec une phase organique contenant au moins un agent d'extraction insoluble dans l'eau, éventuellement en solution dans un diluant, et choisi parmi la classe des agents d'extraction anioniques, celles des agents d'extraction solvatants ou celle des agents d'extraction cationiques de façon à séparer par extraction liquide/liquide le gallium des terres rares, dans une troisième étape on récupère suite à ladite extraction le gallium dans la phase organique et les terres rares dans la phase aqueuse ou le gallium dans la phase aqueuse et les terres rares dans la phase organique.

2. Procédé selon la revendication 1, caractérisé en ce que la mise en solution du mélange s'effectue par attaque de celui-ci par au moins un acide pris dans le groupe constitué par l'acide chlorhydrique, l'acide nitrique, l'acide sulfurique, l'acide perchlorique, l'acide phosphorique.

3. Procédé selon la revendication 2, caractérisé en ce que l'acide est mis en œuvre pur concentré à l'ébullition.

4. Procédé selon les revendications 2 et 3, caractérisé en ce que l'on opère l'attaque à reflux en mettant en œuvre un excès d'acide par rapport à la stoechiométrie tel que l'acidité résiduelle du milieu en fin d'attaque soit supérieure à 2 N.

5. Procédé selon les revendications 1 et 2, caractérisé en ce que le mélange d'oxydes est tel qu'il est constitué de particules ayant un diamètre inférieur à 400 micromètres.

6. Procédé selon la revendication 5, caractérisé en ce que les particules ont un diamètre compris entre 50 et 200 micromètres.

7. Procédé selon la revendication 1, caractérisé en ce que: les agents d'extraction anioniques sont choisis parmi le groupe constitué par les composés organiques à chaîne hydrocarbonée, ayant, de préférence, entre 5 et 30 atomes de carbone et comportant des fonctions amines primaires, secondaires, tertiaires et les sels d'ammonium, sulfonium, phosphonium, quaternaires.

8. Procédé selon la revendication 7, caractérisé en ce que, les agents d'extraction anioniques sont choisis parmi le groupe constitué par:

— les composés constitués d'amines primaires de formule:

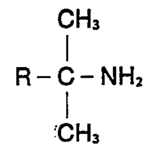

dans laquelle R est un radical hydrocarboné ayant de 18 à 24 atomes de carbone,

— les composés constitués d'amines secondaires de formule:

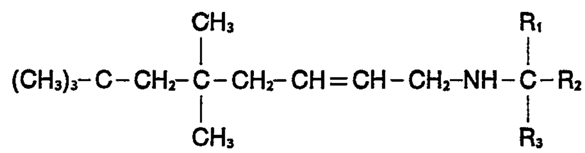

dans laquelle les radicaux hydrocarbonés $R_1$, $R_2$ et $R_3$ sont tels que la somme de leurs atomes de carbone est comprise entre 12 et 14,

— les composés qui sont constitués d'amines tertiaires de formule $R_3N$ dans laquelle le radical hydrocarboné R a de 8 à 10 atomes de carbone,

— les composés qui sont constitués de sels d'ammonium quaternaires de formule:

$$[R_3N-CH_3]^+ X^-$$

dans laquelle le radical hydrocarboné R a de 8 à 10 atomes de carbone et X représente un anion, de préférence, chlorure, nitrate ou sulfate,

— les sels de sulfonium de formule générale

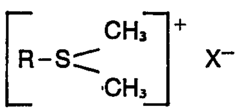

dans laquelle le radical hydrocarboné R a de 10 à 18 atomes de carbone et X représente un anion de préférence chlorure ou nitrate.

9. Procédé selon la revendication 1, caractérisé en ce que les agents d'extraction solvatants sont choisis parmi le groupe constitué par les esters, les éthers, les sulfoxydes, les cétones, les alcools, les composés organophosphorés neutres et les oxydes de trialkylamine.

10. Procédé selon la revendication 9, caractérisé en ce que les agents d'extraction solvatants sont choisis parmi le groupe constitué par:

— les esters de formule générale

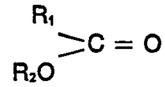

dans laquelle $R_1$ et $R_2$ sont des radicaux hydro-

carbonés aromatiques et/ou aliphatiques ayant, de préférence, au moins 4 atomes de carbone;

— les éthers de formule générale $R_1 - O - R_2$ dans laquelle $R_1$ et $R_2$ sont des radicaux hydrocarbonés aromatiques et/ou aliphatiques ayant, de préférence, au moins 4 atomes de carbone;

— les sulfoxydes de formule générale

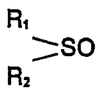

dans laquelle $R_1$ et $R_2$ sont des radicaux hydrocarbonés aromatiques et/ou aliphatiques ayant, de préférence, au moins 4 atomes de carbone;

— les cétones de formule générale

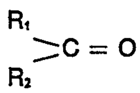

dans laquelle $R_1$ et $R_2$ sont des radicaux hydrocarbonés aromatiques et/ou aliphatiques ayant, de préférence, au moins 4 atomes de carbone;

— les alcools de formule générale ROH dans laquelle R est un radical hydrocarboné aliphatique et/ou cycloaliphatique ayant de préférence, au moins 4 atomes de carbone;

— les composés organo-phosphorés neutres de formules générales:

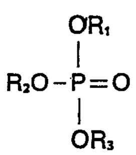 ou 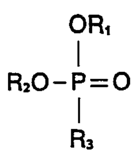 ou 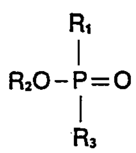 ou

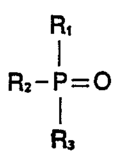

dans lesquelles $R_1$, $R_2$ et $R_3$ représentent des radicaux hydrocarbonés aromatiques et/ou aliphatiques ayant, de préférence, au moins 4 atomes de carbone;

— les oxydes de trialkylamine de formule générale $R_3$ N O dans laquelle R est un radical hydrocarboné aliphatique ayant, de préférence, au moins 4 atomes de carbone.

11. Procédé selon la revendication 10, caractérisé en ce que les agents d'extraction solvatants sont choisis parmi le groupe constitué par:

— les acétates d'éthyle et de butyle;

— les diéthyléthers et les éthers isopropylique et di-n-butylique;

— le di-n-pentylsulfoxyde, le di-n-octylsulfoxyde, le diphénylsulfoxyde;

— les diisopropyl cétones, la méthylisobutylcétone, l'oxyde mésityle;

— le cyclohexanol, le n-hexanol 1, le 2-éthyl hexanol, le n-heptanol, le n-octanol;

— les stéaryl et cétyl esters de l'acide phosphorique, le tributylphosphate, le dibutyl butylphosphonate, le bis (2-éthylhexyl) 2-éthylhexyl phosphonate, le bis(dichlorométhyl) butyl phosphonate, l'oxyde de tri-n-octylphosphine;

— l'oxyde de trioctylamine.

12. Procédé selon la revendication 1, caractérisé en ce que les agents d'extraction cationiques sont choisis parmi le groupe constitué par les acides organophosphorés; les acides aliphatiques ou aromatiques; les acides aliphatiques, aromatiques ou cycloaliphatiques halogénés; les acides naphténiques; les fractions lourdes acides; les acides sulfoniques; les acides Versatic, les β-dicétones.

13. Procédé selon la revendication 12, caractérisé en ce que les agents d'extraction cationiques sont choisis parmi le groupe constitué par:

— les acides organophosphorés de formules générales:

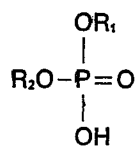 ou 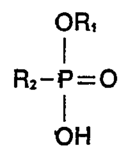 ou 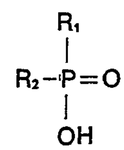

dans lesquelles $R_1$ et $R_2$ représentent des radicaux hydrocarbonés aliphatiques ou aromatiques tels que la somme des atomes de carbone des deux radicaux est au moins égale à 10;

— les acides aliphatiques dans lesquels les radicaux hydrocarbonés ont de 3 à 20 atomes de carbone;

— les acides aliphatiques, aromatiques ou cycloaliphatiques halogénés;

— les acides naphténiques ayant la formule générale:

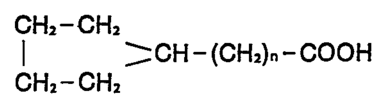

dans laquelle n est $\geqslant 1$;

— les fractions lourdes acides comportant notamment des mélanges d'acides en $C_5$-$C_6$, $C_7$-$C_9$, $C_9$-$C_{11}$, $C_{10}$-$C_{16}$, $C_{10}$-$C_{13}$, $C_{12}$-$C_{16}$;

— les acides sulfoniques;

— les acides «Versatic» ayant pour formule générale

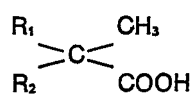

dans laquelle $R_1$ et $R_2$ sont les radicaux hydrocarbonés substitués ou non;

— les β-dicétones.

14. Procédé selon la revendication 13, caractérisé en ce que les agents d'extraction cationiques sont choisis parmi le groupe constitué par:

— l'acide di(2-éthylhexyl) phosphorique et l'acide bis(2-éthyl hexyl) phosphonique;

— les acides butanoïque, valerique, octoïque, caproïque, caprylique, caprique, pélargonique, laurique,

— l'acide alpha-bromolaurique;

— l'acide dinonylnaphtalène sulfonique;

— les acides «Versatic» qui sont des mélanges d'acides monocarboxyliques tertiaires saturés pour lesquels $R_1$ et $R_2$ sont des radicaux hydrocarbonés dont la somme des atomes de carbone des deux radicaux est égale à 6, 7 ou 8; celui pour lequel $R_1$ est un radical hexyle et $R_2$ un radical octyle; celui pour lequel $R_1$ et $R_2$ sont des radicaux hydrocarbonés dont la somme des atomes de carbone des deux radicaux est égale à 7;

— l'acétylacétone.

15. Procédé selon les revendications 7 et 8, caractérisé en ce que lorsque l'anion présent dans la solution aqueuse d'attaque est l'anion nitrate, l'agent d'extraction anionique est choisi parmi le groupe constitué par les amines tertiaires et les sels d'ammonium quaternaires.

16. Procédé selon les revendications 9, 10 et 11, caractérisé en ce que lorsque l'anion présent dans la solution aqueuse d'attaque est l'anion nitrate, l'agent d'extraction solvatant est choisi parmi le groupe constitué par les dérivés organophosphorés et les sulfoxydes.

17. Procédé selon les revendications 7, 8, 9, 10 et 11, caractérisé en ce que l'on ajoute à la solution aqueuse d'attaque issue de l'attaque des sels neutres non extractibles dont l'anion est celui présent dans ladite solution aqueuse et dont le cation est choisi parmi le groupe constitué par les alcalins, les alcalino-terreux et l'aluminium.

18. Procédé selon les revendications 7, 8, 9, 10 et 11, caractérisé en ce que lorsque l'anion présent dans la solution aqueuse d'attaque est l'anion chlorure, on ajoute à celle-ci de l'acide chlorhydrique.

19. Procédé selon la revendication 1, caractérisé en ce que la phase organique contient en outre au moins un agent modifieur pris dans le groupe constitué par les alcools et les phénols dont le nombre d'atomes de carbone est compris entre 6 et 15.

20. Procédé selon les revendications 7, 8, 9, 10 et 11, caractérisé en ce que la récupération en solution aqueuse du gallium ou des terres rares qui a été extrait ou qui ont été extraits dans la phase organique s'effectue par mise en contact de cette phase organique avec une solution aqueuse ou faiblement acide, le ou les éléments extraits transférant de la phase organique dans la phase aqueuse.

21. Procédé selon la revendication 20, caractérisé en ce que la concentration en ions $H^+$ de la solution aqueuse faiblement acide est inférieure ou égale à 0,1 N.

22. Procédé selon les revendications 12, 13 et 14, caractérisé en ce que la récupération en solution aqueuse du gallium ou des terres rares qui a été extrait ou qui ont été extraits dans la phase organique s'effectue, par mise en contact de cette solution organique avec une solution aqueuse d'acide fort, l'acide fort utilisé peut être identique ou différent de celui mis en œuvre lors de l'attaque, le ou les éléments transférant de la phase organique dans la solution aqueuse acide.

**Patentansprüche**

1. Verfahren zur Behandlung von Gemischen von Oxiden von seltenen Erden und von Gallium, dadurch gekennzeichnet, dass man in einer ersten Stufe das Gemisch mit Hilfe einer Säure löst, in einer zweiten Stufe die beim sauren Aufschluss erhaltene Lösung mit einer organischen Phase in Berührung bringt, die, gegebenenfalls als Lösung in einem Verdünnungsmittel, wenigstens ein in Wasser unlösliches Extraktionsmittel enthält, das aus der Gruppe der anionischen, solvatisierenden oder kationischen Extraktionsmittel gewählt ist, um durch Flüssig-Flüssig-Extraktion das Gallium von den seltenen Erden zu trennen, in einer dritten Stufe nach der genannten Extraktion das Gallium mit der organischen Phase und die seltenen Erden in der wässrigen Phase oder das Gallium in der wässrigen Phase und die seltenen Erden in der organischen Phase gewinnt.

2. Verfahren nach Anspruch 1, dadurch gekennzeichnet, dass die Auflösung des Gemisches durch Aufschluss desselben mit wenigstens einer Säure aus der aus Salzsäure, Salpetersäure, Schwefelsäure, Perchlorsäure und Phosphorsäure bestehenden Gruppe erfolgt.

3. Verfahren nach Anspruch 2, dadurch gekennzeichnet, dass die Säure konzentriert und am Siedepunkt eingesetzt wird.

4. Verfahren nach den Ansprüchen 2 und 3, dadurch gekennzeichnet, dass man den Aufschluss am Rückfluss durchführt und einen solchen stöchiometrischen Überschuss der Säure verwendet, dass die verbleibende Aktivität der Lösung nach dem Aufschluss über 2 N liegt.

5. Verfahren nach den Ansprüchen 1 und 2, dadurch gekennzeichnet, dass das Oxidgemisch aus Teilchen eines Durchmessers unter 400 µm besteht.

6. Verfahren nach Anspruch 5, dadurch gekennzeichnet, dass die Teilchen einen Durchmesser zwischen 50 und 200 µm haben.

7. Verfahren nach Anspruch 1, dadurch gekennzeichnet, dass die anionischen Extraktionsmittel aus der Gruppe der organischen Verbindungen mit Kohlenwasserstoffkette gewählt sind, die vorzugsweise zwischen 5 und 30 Kohlenstoffatome besitzt und primäre, sekundäre oder tertiäre Aminfunktionen oder quaternäre Ammoniumsulfonium- oder Phosphoniumsalze enthält.

8. Verfahren nach Anspruch 7, dadurch gekennzeichnet, dass die anionischen Extraktionsmittel aus der folgenden Gruppe gewählt sind:

— Substanzen, bestehend aus primären Aminen der Formel

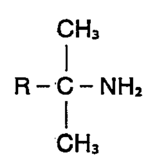

in der R ein Kohlenwasserstoffrest mit 18 bis 24 Kohlenstoffatomen ist,

— Substanzen, bestehend aus sekundären Aminen der Formel:

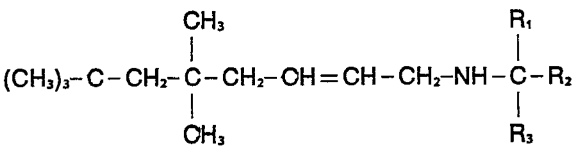

in der die Kohlenwasserstoffreste $R_1$, $R_2$ und $R_3$ derart sind, dass die Summe der Anzahl ihrer Kohlenstoffatome zwischen 12 und 14 liegt,

— Substanzen, die aus tertiären Aminen der allgemeinen Formel $R_3N$ bestehen, in der der Kohlenwasserstoffrest R 8 bis 10 Kohlenstoffatome hat,

— Substanzen, die aus quaternären Ammoniumverbindungen der Formel:

$$[R_3N - CH_3]^+ X^-$$

in der der Kohlenwasserstoffrest R 8 bis 10 Kohlenstoffatome besitzt und X ein Anion, vorzugsweise Chlorid, Nitrat oder Sulfat bedeutet,

— die Sulfoniumsalze der allgemeinen Formel

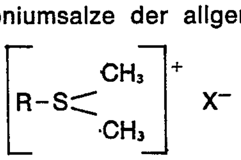

in der der Kohlenwasserstoffrest R 10 bis 18 Kohlenstoffatome besitzt und X ein Anion, vorzugsweise Chlorid oder Nitrat bedeutet.

9. Verfahren nach Anspruch 1, dadurch gekennzeichnet, dass die solvatisierenden Extraktionsmittel aus der Gruppe der Ester, Äther, Sulfoxide, Ketone, Alkohole, neutralen Organophosphorverbindungen und Trialkylaminoxide gewählt sind.

10. Verfahren nach Anspruch 2, dadurch gekennzeichnet, dass die solvatisierenden Extraktionsmittel aus der folgenden Gruppe ausgewählt sind:

— Ester der allgemeinen Formel

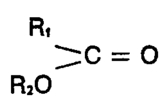

in der $R_1$ und $R_2$ aromatische und/oder aliphatische Kohlenwasserstoffreste sind, die vorzugsweise wenigstens 4 Kohlenstoffatome haben;

— Äther der allgemeinen Formel $R_1 - O - R_2$, in der $R_1$ und $R_2$ aromatische und/oder aliphatische Kohlenwasserstoffreste mit vorzugsweise wenigstens 4 Kohlenstoffatomen sind;

— Sulfoxide der allgemeinen Formel

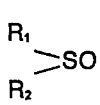

in der $R_1$ und $R_2$ aromatische und/oder aliphatische Kohlenwasserstoffreste mit vorzugsweise wenigstens 4 Kohlenstoffatomen sind;

— Ketone der allgemeinen Formel

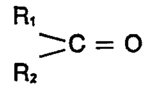

in der $R_1$ und $R_2$ aromatische und/oder aliphatische Kohlenwasserstoffreste sind, die vorzugsweise wenigstens 4 Kohlenstoffatome haben;

— Alkohole der allgemeinen Formel ROH, in der R ein aliphatischer und/oder cycloaliphatischer Kohlenwasserstoffrest ist, der vorzugsweise wenigstens 4 Kohlenstoffatome hat;

— neutrale Organophosphorverbindungen der allgemeinen Formeln

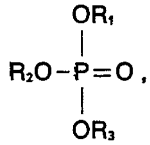,
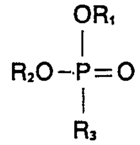,
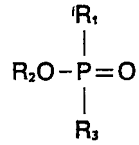 oder

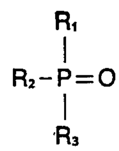

in denen $R_1$, $R_2$ und $R_3$ aromatische und/oder aliphatische Kohlenwasserstoffreste bedeuten, die vorzugsweise mindestens 4 Kohlenstoffatome haben;

— Trialkylaminoxide der allgemeinen Formel $R_3NO$, in der R ein aliphatischer Kohlenwasserstoffrest ist, der vorzugsweise wenigstens 4 Kohlenstoffatome enthält.

11. Verfahren nach Anspruch 10, dadurch gekennzeichnet, dass die solvatisierenden Extraktionsmittel aus der folgenden Gruppe gewählt sind:

— Äthyl- und Butylacetate;

— Diäthyl-, Isopropyl- und Di-n-butyl-äther;

— Di-n-pentylsulfoxid, Di-n-octylsulfoxid, Diphenylsulfoxid;

— Diisopropylketonen, Methylisobutylketon, Mesityloxid;

— Cyclohexanol, n-Hexanol-1, 2-Äthylhexanol, n-Heptanol, n-Octanol;

— Stearyl- und Cetylester der Phosphorsäure, Tributylphosphat, Dibutyl-butylphosphonat, Bis(2-äthylhexyl)-2-äthylhexyl-phosphonat, Bis(dichlormethyl)-butyl-phosphonat, Tri-n-octylphosphinoxid;

— Trioctylaminoxid.

12. Verfahren nach Anspruch 1, dadurch gekennzeichnet, dass die kationischen Extraktionsmittel aus der folgenden Gruppe ausgewählt sind: Organophosphorsäuren; aliphatische oder aromatische Säuren; halogenierte aliphatische, aromatische oder cycloaliphatische Säuren; Naphthensäure; Sumpffraktionen von Säuren; Sulfonsäuren; Versatic-Säuren; β-Diketone.

13. Verfahren nach Anspruch 12, dadurch gekennzeichnet, dass die kationischen Extraktionsmittel aus der folgenden Gruppe ausgewählt sind:

— Organophosphorsäuren der allgemeinen Formeln:

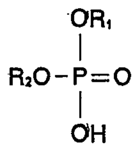 oder 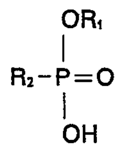 oder 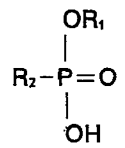

in denen $R_1$ und $R_2$ aliphatische oder aromatische Kohlenwasserstoffreste bedeuten, wobei die Summe der Kohlenstoffatome der beiden Reste wenigstens 10 ist;

— aliphatische Säuren, in denen die Kohlenwasserstoffreste 3 bis 20 Kohlenstoffatome haben;

— halogenierte aliphatische, aromatische oder cycloaliphatische Säuren;

— Naphthensäuren der allgemeinen Formel

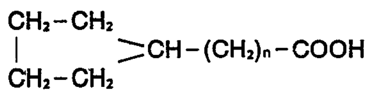

in der $n \geqslant 1$ ist;

— Sumpffraktionen von Säuren, die insbesondere Gemische von $C_5$-$C_6$-, $C_7$-$C_9$-, $C_9$-$C_{11}$-, $C_{10}$-$C_{16}$-, $C_{11}$-$C_{13}$- oder $C_{12}$-$C_{16}$-Säuren enthalten;

— Sulfonsäuren;

— «Versatic»-Säuren der allgemeinen Formel

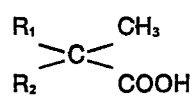

in der $R_1$ und $R_2$, gegebenenfalls substituierte, Kohlenwasserstoffreste sind;

— β-Diketone.

14. Verfahren nach Anspruch 13, dadurch gekennzeichnet, dass die kationischen Extraktionsmittel aus der folgenden Gruppe ausgewählt sind:

— Di-(2-äthylhexyl)-phosphorsäure und Bis-(2-äthylhexyl)-phosphonsäure;

— Butter-, Valerian-, Octan-, Capron-, Capryl-, Caprin-, Pelargon-, Laurin-Säure;

— alpha-Bromlaurinsäure;

— Dinonylnaphthalinsulfonsäure;

— «Versatic»-Säuren, die Gemische von tertiären gesättigten Monocarbonsäuren sind, bei denen die Reste $R_1$ und $R_2$ gesättigte Kohlenwasserstoffreste sind, die zusammen 6, 7 oder 8 Kohlenstoffatome haben; bei denen $R_1$ ein Hexylrest und $R_2$ ein Octylrest ist; bei denen $R_1$ und $R_2$ Kohlenwasserstoffreste sind, die zusammen 7 Kohlenstoffatome haben,

— Acetylaceton.

15. Verfahren nach den Ansprüchen 7 und 8, dadurch gekennzeichnet, dass dann, wenn das Anion der wässrigen Aufschlusslösung Nitrat ist, das anionische Extraktionsmittel aus der Gruppe der tertiären Amine und der quaternären Ammoniumsalze gewählt wird.

16. Verfahren nach den Ansprüchen 9, 10 und 11, dadurch gekennzeichnet, dass dann, wenn das in der wässrigen Aufschlusslösung vorliegende Anion Nitrat ist, das solvatisierende Extraktionsmittel aus der Gruppe der Organophosphorverbindungen und der Sulfoxide gewählt wird.

17. Verfahren nach den Ansprüchen 7 bis 11, dadurch gekennzeichnet, dass man der wässrigen Aufschlusslösung nicht extrahierbare neutrale Salze zugibt, deren Anion das in der wässrigen Lösung vorliegende ist und deren Kation aus der Gruppe der Alkalien, der Erdalkalien und des Aluminiums gewählt ist.

18. Verfahren nach den Ansprüchen 7 bis 11, dadurch gekennzeichnet, dass dann, wenn das in der wässrigen Aufschlusslösung vorliegende Anion Chlorid ist, man dieser Salzsäure zugibt.

19. Verfahren nach Anspruch 1, dadurch gekennzeichnet, dass die organische Phase zusätzlich mindestens ein modifizierendes Mittel aus der Gruppe der Alkohole und Phenole mit einer Anzahl der Kohlenstoffatome von 6 bis 15 ist.

20. Verfahren nach den Ansprüchen 7 bis 11, dadurch gekennzeichnet, dass die Wiedergewinnung des von der organischen Phase extrahierten Galliums oder der seltenen Erden in wässriger Lösung durch Inberührungbringen dieser organischen Phase mit einer wässrigen oder leicht sauren Lösung erfolgt, wobei das oder die extrahierten Elemente von der organischen in die wässrige Phase übergehen.

21. Verfahren nach Anspruch 20, dadurch gekennzeichnet, dass die $H^+$-Ionenkonzentration der schwach sauren wässrigen Lösung unter oder gleich 0,1 N ist.

22. Verfahren nach den Ansprüchen 12 bis 14, dadurch gekennzeichnet, dass die Wiedergewinnung des von der organischen Phase extrahierten Gallium oder der seltenen Erden in wässriger Lösung durch Inberührungbringen dieser organischen Lösung mit der wässrigen Lösung einer starken Säure erfolgt, die gleich oder verschieden von derjenigen ist, die für den Aufschluss verwendet wurde, und dass das oder die Elemente von der organischen Phase in die wässrige saure Lösung übergehen.

## Claims

1. Process for the treatment of a mixture of rare earth oxides and gallium oxides, characterised in that, in a first step, the mixture is dissolved by means of an acid, in a second step, the solution resulting from the acid attack is brought into contact with an organic phase containing at least one water-insoluble extraction agent, optionally dissolved in a diluent and chosen from amongst the class of the anionic extraction agents, the classes of the solvating extraction agents or the class of the cationic extraction

agents, so as to separate the gallium from the rare earths by liquid-liquid extraction, and in a third step, after the said extraction, the gallium is recovered in the organic phase and the rare earths in the aqueous phase, or the gallium is recovered in the aqueous phase and the rare earths in the organic phase.

2. Process according to Claim 1, characterised in that the mixture is dissolved by means of attack by at least one acid taken from the group comprising hydrochloric acid, nitric acid, sulphuric acid, perchloric acid and phosphoric acid.

3. Process according to Claim 2, characterised in that the acid is used pure and concentrated, at the boil.

4. Process according to Claims 2 and 3, characterised in that attack is carried out under reflux, using an excess of acid, relative to stoichiometry, which is such that the residual acidity of the medium is more than 2 N after attack has taken place.

5. Process according to Claims 1 and 2, characterised in that the mixture of oxides is such that it consists of particles having a diameter of less than 400 micrometers.

6. Process according to Claim 5, characterised in that the particles have a diameter of between 50 and 200 micrometers.

7. Process according to Claim 1, characterised in that: the anionic extraction agents are chosen from amongst the group comprising organic compounds which have a hydrocarbon chain preferably having between 5 and 30 carbon atoms, and which contain primary, secondary or tertiary amine groups, and quaternary ammonium, sulphonium and phosphonium salts.

8. Process according to Claim 7, characterised in that the anionic extraction agents are chosen from amongst the group comprising:

the compounds consisting of primary amines of the formula:

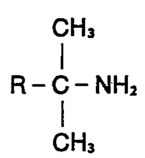

in which R is a hydrocarbon radical having from 18 to 24 carbon atoms,

the compounds consisting of secondary amines of the formula:

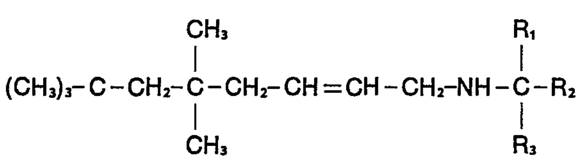

in which the hydrocarbon radicals $R_1$, $R_2$ und $R_3$ are such that the sum of the carbon atoms therein is between 12 and 14,

the compounds consisting of tertiary amines of the formula $R_3N$, in which the hydrocarbon radical R has from 8 to 10 carbon atoms,

the compounds consisting of quaternary ammonium salts of the formula:

$$[R_3N-CH_3]^+ X^-$$

in which the hydrocarbon radical R has from 8 to 10 carbon atoms and X represents an anion, preferably chloride, nitrate or sulphate, and

the sulphonium salts of the general formula:

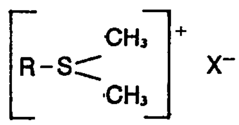

in which the hydrocarbon radical R has from 10 to 18 carbon atoms and X represents an anion, preferably chloride or nitrate.

9. Process according to Claim 1, characterised in that the solvating extraction agents are chosen from amongst the group comprising esters, ethers, sulphoxides, ketones, alcohols, neutral organophosphorus compounds and trialkylamine oxides.

10. Process according to Claim 9, characterised in that the solvating extraction agents are chosen from amongst the group comprising:

the esters of the general formula:

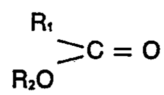

in which $R_1$ and $R_2$ are aromatic and/or aliphatic hydrocarbon radicals preferably having at least 4 carbon atoms;

the ethers of the general formula $R_1$-O-$R_2$, in which $R_1$ and $R_2$ are aromatic and/or aliphatic hydrocarbon radicals preferably having at least 4 carbon atoms;

the sulphoxides of the general formula:

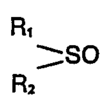

in which $R_1$ and $R_2$ are aromatic and/or aliphatic hydrocarbon radicals preferably having at least 4 carbon atoms;

the ketones of the general formula:

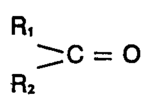

in which $R_1$ and $R_2$ are aromatic and/or aliphatic hydrocarbon radicals preferably having at least 4 carbon atoms;

the alcohols of the general formula ROH, in which R is an aliphatic and/or cycloaliphatic hydrocarbon radical preferably having at least 4 carbon atoms;

the neutral organophosphorus compounds of the general formulae:

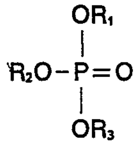 or 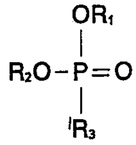 or 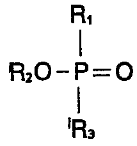 or

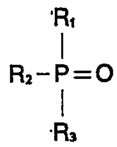

in which $R_1$, $R_2$ and $R_3$ represent aromatic and/or aliphatic hydrocarbon radicals preferably having at least 4 carbon atoms; and

the trialkylamine oxides of the general formula $R_3NO$, in which R is an aliphatic hydrocarbon radical preferably having at least 4 carbon atoms.

11. Process according to Claim 10, characterised in that the solvating extraction agents are chosen from amongst the group comprising; ethyl acetate and butyl acetate; diethyl ether and isopropyl and di-n-butyl ethers; di-n-pentyl sulphoxide, di-n-octyl sulphoxide and diphenyl sulphoxide; diisopropyl ketone, methyl isobutyl ketone and mesityl oxide; cyclohexanol, n-hexan-1-ol, 2-ethylhexanol, n-heptanol and n-octanol; the stearyl and cetyl esters of phosphoric acid, tributyl phosphate, dibutyl butylphosphonate, bis-(2-ethylhexyl) 2-ethylhexylphosphonate, bis-(dichloromethyl) butylphosphonate and tri-n-octylphosphine oxide; and trioctylamine oxide.

12. Process according to Claim 1, characterised in that the cationic extraction agents are chosen from amongst the group comprising organophosphorus acids; aliphatic or aromatic acids; halogen-containing aliphatic, aromatic or cycloaliphatic acids; naphthenic acids; heavy acid fractions; sulphonic acids; Versatic acids and β-diketones.

13. Process according to Claim 12, characterised in that the cationic extraction agents are chosen fom amongst the group comprising:

organophosphorus acids of the general formulae:

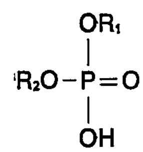 or 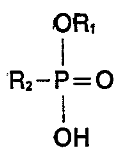 or 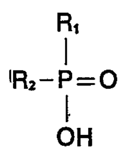

in which $R_1$ and $R_2$ represent aliphatic or aromatic hydrocarbon radicals which are such that the sum of the carbon atoms in the two radicals is equal to at least 10;

aliphatic acids in which the hydrocarbon radicals have from 3 to 20 carbon atoms;

halogen-containing aliphatic, aromatic or cycloaliphatic acids;

the naphthenic acids having the general formula:

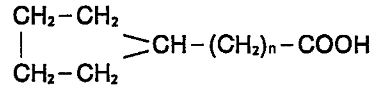

in which n is ⩾ 1;

heavy acid fractions containing, in particular, mixtures of $C_5$-$C_6$ $C_7$-$C_9$, $C_9$-$C_{11}$, $C_{10}$-$C_{16}$, $C_{10}$-$C_{13}$ and $C_{12}$-$C_{16}$ acids;

sulphonic acids;

the «Versatic» acids having the general formula:

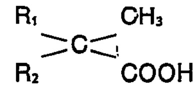

in which $R_1$ and $R_2$ are substituted or unsubstituted hydrocarbon radicals; and

β-diketones.

14. Process according to Claim 13, characterised in that the cationic extraction agents are chosen from amongst the group comprising: di-(2-ethylhexyl)-phosphoric acid and bis-(2-ethylhexyl)-phosphonic acid; butanoic, valeric, octoic, caproic, caprylic, capric, pelargonic and lauric acids; alpha-bromolauric acid; dinonylnaphthalenesuplhonic acid; the «Versatic» acids which are mixtures of saturated tertiary monocarboxylic acids in which $R_1$ and $R_2$ are hydrocarbon radicals in which the sum of the carbon atoms in the two radicals is equal to 6, 7 or 8, the Versatic acid in which $R_1$ is a hexyl radical and $R_2$ is an octyl radical, and the Versatic acid in which $R_1$ and $R_2$ are hydrocarbon radicals in which the sum of the carbon atoms in the two radicals is equal to 7; and acetylacetone.

15. Process according to Claims 7 and 8, characterised in that, if the anion present in the aqueous attacking solution is the nitrate anion, the anionic extraction agent is chosen from amongst the group comprising tertiary amines and quaternary ammonium salts.

16. Process according to Claims 9, 10 and 11, characterised in that, if the anion present in the aqueous attacking solution is the nitrate anion, the solvating extraction agent is chosen from amongst the group comprihing organophosphorus derivatives and sulphoxides.

17. Process according to Claims 7, 8, 9, 10 and 11, characterised in that non-extractable neutral salts, in which the anion is the one present in the aqueous attacking solution and in which the cation is chosen from amongst the group comprising alkali metals, alkaline earth metals and aluminium, are added to the said aqueous solution resulting from attack.

18. Process according to Claims 7, 8, 9, 10 and 11, characterised in that, if the anion present in the aqueous attacking solution is the chloride anion, hydrochloric acid is added to the said aqueous solution.

19. Process according to Claim 1, characterised in that the organic phase additionally contains at least one modifier taken from the group comprising alcohols and phenols in which the number of carbon atoms is between 6 and 15.

20. Process according to Claims 7, 8, 9, 10

and 11, characterised in that the recovery, in aqueous solution, of the gallium or the rare earths which has been extracted or which have been extracted into the organic phase is carried out by bringing this organic phase into contact with an aqueous or weakly acid solution, the extracted element or elements transferring from the organic phase into the aqueous phase.

21. Process according to Claim 20, characterised in that the concentration $H^+$ ions in the weakly acid aqueous solution is less than or equal to 0.1 N..

22. Process according to Claims 12, 13 and 14, characterised in that the recovery, in aqueous solution, of the gallium or the rare earths which has been extracted or which have been extrated into the organic phase is carried out by bringing this organic solution into contact with an aqueous solution of a strong acid, it being possible for the strong acid used to be identical to or different from that used for attack, and the element or elements transferring from the organic phase into the acid aqueous solution.